# EUROPEAN PATENT SPECIFICATION

(11) **EP 3 319 927 B1**
(45) Date of publication and mention of the grant of the patent: **31.03.2021**
(21) Application number: 16744878.6
(22) Date of filing: 11.05.2016
(51) Int. Cl.: C05G 5/12, C05C 7/00, C05F 11/08, C05F 7/00

(54) **SOIL IMPROVER COMPRISING SILT WITH MYCORRHIZAE THEREIN, AS WELL AS METHOD FOR THE PRODUCTION OF THE SOIL IMPROVER**
BODENVERBESSERUNGSMITTEL MIT SCHLICK MIT MYCORRHIZAE DARIN SOWIE VERFAHREN ZUR HERSTELLUNG DES BODENVERBESSERUNGSMITTEL
SYSTÈME D'AMÉLIORATION DE SOL COMPRENANT UN LIMON CONTENANT UN MYCORHIZE ET UN PROCÉDÉ DE PRODUCTION DU SYSTÈME D'AMÉLIORATION DE SOL

(30) Priority: 13.05.2015 NL 2014804; 01.06.2015 NL 2014902
(43) Date of publication of application: 16.05.2018
(73) Proprietor: The Triple E Trust Holding B.V., 6811 LJ Arnhem (NL)
(72) Inventor: BADE, Tom, 6815 HL Arnhem (NL)
(74) Representative: Verhees, Godefridus Josephus Maria
(86) International application number: PCT/NL2016/050336
(87) International publication number: WO 2016/182442

(56) References cited:
- EP-A1- 0 422 265
- EP-A2- 0 092 990
- WO-A1-03/000622
- WO-A1-2005/051868
- WO-A1-2008/120968
- GB-A- 2 067 218
- KR-B1- 100 727 123
- NL-A- 7 608 433

## Description

### Field of the invention

The invention relates to a soil conditioner comprising a solid body and a microorganism comprising mycorrhiza introduced into the solid body. Soil conditioners are materials which are added to the soil for the benefit of improving the fertility of the soil so that plants show better growth and are healthier.

Silt is a sediment on the bottom of a water body of solid particles present in (running) water. Where the current is reduced, the particles are deposited as a kind of clay on the bottom. Silt of natural origin may be utilized as soil conditioner and usually produces fertile soil. Nowadays silt is not much used any longer because compost is supposed to be better and much silt is polluted at present, generally with heavy metals.

A solid body in this context is understood to mean a non-viscous body, for example a granular body or one in the form of a tablet.

A mycorrhiza is a mutualistic symbiosis of fungi and plant roots. Mutualism is one of the forms of symbiosis (mutualistic symbiosis). Symbiosis exists when two organisms of different species exist in a long relationship with each other (long interaction), where the relationship/interaction is advantageous or even necessary for at least one of the organisms. In the event of mutualism both species benefit from the relationship/interaction.

In an unharmed ecosystem the roots of most plants are capable of starting a symbiosis with specific fungi, which symbiotic association is called mycorrhiza. Depending on the structure and the fungus partners there is a distinction between various kinds of mycorrhiza, that is to say, ectomycorrhiza and endomycorrhiza. In the case of endotrophic mycorrhiza, as is found in for example orchids, the fungus threads invade the bark cells of the root of the plant. In the case of ectotrophic mycorrhiza, as is found in for example pine trees and birch trees, the fungus threads grow only around the outside of the root of the plant. The fungus threads then invade the intercellular spaces and thus not the cells of the bark tissue of the root of the plant. An example of this is the truffle.

More particularly as a result of the exuberant growth and small diameter of hyphae (about 3µm), mycorrhizal fungi are capable of exploiting a large soil volume and taking up nutrients such as nitrogen and phosphor. Each mycorrhizal fungus has a specific function. For example, some mycorrhizal fungi can take up especially anorganic nutrients, whereas other fungi rather take up organic nutrients, for example from humus. Besides, mycorrhizal fungi may contribute to resistance of trees and plants to soil pathogenes, dehydration and heavy metals.

Many mycorrhizae form a fungus root or ectomycorrhiza, a mycelium, which surrounds the roots and protects them from dehydration, heavy metals and parasites. From there it grows as a finely branched network of fungus threads from among the roots and thus provides improvement of the root stability and enhancement of the rooting power and the absorptive capacity of the root system by a factor of 1000. Via this extensive network the supply takes place of water as well as nutritive salts dissolved in water from the soil to the tree.

Especially on nutrient-poor soil plants with mycorrhizae grow much better than plants without such symbiosis. This is explained by the fact that fungal hyphae can search for scarce elements such as phosphor in a much more effective way than roots can do this by themselves. The past few years the interest in mycorrhiza has grown considerably in the fields of farming and forestry, more particularly also in connection with reforestation and the insight gained that environmental pollution damages the health of the trees by attacking exactly these mycorrhizae. And even in the event that plants are capable of surviving without mycorrhiza, it turns out that the plants that do have mycorrhiza need to have much less fertilizer, have better growth on poor soil and are more resistant to heavy metals, temperature and Ph fluctuations etc. It is estimated that 90% of all plants have some form of mycorrhiza or other.

### State of the art

Soil conditioners are generally known. A much-used soil conditioner is fertilizer. However, this known soil conditioner is relatively expensive. In addition, one of the main components of fertilizer becomes ever scarcer, that is the phosphate element. Besides, there is ever more need for fertilizer since as a result of intensive farming as well as erosion the soil is ever more exhausted. Consequently, there is a need for a cost-effective soil conditioner which can be produced in vast quantities.

A soil conditioner according to the preamble of claim 1 is known from EP0092990A. The solid body of this known soil conditioner mainly consists of peat.

### Summary of the invention

It is an object of the invention to provide a properly working and cost-effective soil conditioner. For this purpose the soil conditioner according to the invention is characterized in that that the solid body comprises partly dried silt being river sediment and in that the soil conditioner in addition to mycorrhiza comprises further living organisms comprising one or more of the following organisms, worms, worm eggs and predators, comprising predator mites. River sediment comprises many components that may function as fertilizers as a result of their nutritive value for plants and trees and is therefore pre-eminently suitable for being present as a component in the soil conditioner. By adding mycorrhiza to silt, the silt can be used as a (major)component of a soil conditioner.

In the soil conditioner according to the invention mycorrhiza first of all has a purifying function in the silt in that damaging materials in the silt are removed or isolated. In addition to this, the mycorrhiza has a positive effect on the improvement of the soil structure. The soil conditioner is preferably to be stored for a period of time after production so as to allow the mycorrhiza to carry out its purifying function in the silt and can then be applied to the silt only after this period of time. Thus a product such as silt, which is nowadays considered to be waste, becomes the major component of a new soil conditioner. In this way a waste problem is solved and at the same time a soil conditioner is obtained. Since the major component (silt) of this soil conditioner can be obtained in a cost-effective way, also the eventual soil conditioner may be relatively cost effective. Preferably, the silt is present in an at least partly dried state. Furthermore the soil conditioner is present preferably in the form of a solid body. Advantageous shapes of the body are granules and tablets.

In totally degraded situations where the soil has disappeared, the soil conditioner according to the invention may also be used for laying the foundation for the creation of new soil and thus repair of the affected ecosystem by a unique combination of river sediment (possibly complemented with other materials) and living matter (mycorrhiza, worm eggs, seeds of plants). The predators hunt for, for example, detrimental nematodes, where a start is not only directly made with a living soil in situations where there is absolutely no soil left (for example as a consequence of erosion), but also because of its form (block) and composition (sediment) the product can be the bearer (this contrary to for example fertilizer where this is not possible as a consequence of form and composition) for biological neutralization of infestations in cases where the product is applied as a soil conditioner in agriculture. The soil conditioner thus forms a mini ecosystem (a Brick of Life). The product is then not only a bearer of nutrients as a soil conditioner, but also of biological control methods in the form of live matter. As a result of the nature and form of the product, these types can be applied even in the form of spores, eggs or larvae, where they as it were "germinate" the moment they are applied in agriculture. In this context it should also be observed that the silt prior to the application of live matter to the product is a very good bearer because the river sediment originates from an anaerobe environment and makes a transition to an aerobe environment, as a result of which the "former life" in the river sediment dies out completely, whereas the chemical and organic composition is maintained indeed, but at the same time a virginal/clean environment arises, which is highly appropriate for introducing new life which is necessary for the creation of healthy soil.

An embodiment of the soil conditioner according to the invention is characterized in that the soil conditioner further includes at least a single sand grain which is situated in the formless silt or in the silt formed into a body. After the sowing the seed grain is surrounded by fertile matter as a result of which it will develop well irrespective of the environment beyond the soil conditioner.

A further embodiment of the soil conditioner according to the invention is characterized in that the soil conditioner further includes groats. Groats are a residual product from the manufacture of soda (AKZO and later on Brunnermond) which was disposed of in the channel of Watum's Bend from 1957 to 2009. The current was not strong enough to carry along the groats, so that a one-and-a-half metre high pile of groats was formed covering a surface of 22 hectares and having a volume of 335,000 cubic metres. Groats are still allowed to be disposed of in the sea even today; seen from a chemical point of view it is (modified) shells material (marl).

Groats comprise precipitated calcium hydroxide, magnesium hydroxide, calcium carbonate, calcium sulphate, silicon dioxide, unroasted limestone, calcium carbonate, dead-burned calcium oxide, ashes of cokes and metal oxides (among other things aluminium and iron). Precipitated calcium (gypsum) and unburnt calcium carbonate are the major components of the solid matter.

Groats, it is true, may not be waste material, but it is no easy raw material. The use as a soil conditioner in agriculture produces the most added value, while the operations required (dredging, drying on shore and further transport and enrichment) do not so much differ from ("lower-grade") applications.

Thus it seems to be quite possible to make a soil conditioner having groats as a component that meets the requirements made above by means of:
- a low dosage of the groats,
- mixture of the groats with silt and thereby neutralization of the basic character,
- combination with mycorrhiza for neutralization of the heavy metals, and
- application to agriculture, more particularly for crops requiring calcareous soil, more particularly viniculture.

By incorporating the groats in a soil conditioner that contains silt and mycorrhiza, it is more suitable to be used as a raw material in a soil conditioner.

A still further embodiment of the soil conditioner according to the invention is characterized in that the soil conditioner further contains a waste product which can be broken down or isolated by the mycorrhiza. This waste product may be for example oil or light radioactive material. As a result of this the soil conditioner may also be utilized for the improvement of the environment in strongly polluted environments.

The invention likewise relates to a method for producing a soil conditioner. With regard to this method the invention is characterized in that this method comprises the following steps:
- cultivating and harvesting mycorrhiza,
- minimizing the mycorrhiza and selecting for the presence of spores,
- dredging silt,
- drying silt,
- introducing the mycorrhiza into the silt before or after the silt has been dried.and
- adding worms and/or worm eggs to the river sediment.

Mycorrhiza can be cultivated and harvested by propagating plants growing in symbiosis with mycorrhiza. For this purpose it is necessary for the mycorrhiza to be present too. Therefore, during the sowing process it is mandatory to use the soil with the incorporated mycorrhiza and/or to add contaminated (mycorrhizal) soil to the plant hole.

Criteria have been formulated that at least have to be met before mutualism can be thought of. When planting, four of the following six benchmarks should be complied with:
1. the symbiosis of the two bionts is a permanent property of their life cycle,
2. there is physical contact between the two bionts,
3. transport of matter takes place between the bionts, or
4. secretion of matter by one biont leads to an improvement of the environmental conditions for the other biont,
5. morphogenetic effects are perceivable (this is distinctly manifest especially with lichens),
6. metabolic products are formed which are formed by neither of the two bionts alone. Examples:
   - An example of mutualism is the relationship between hermit crabs and sea anemones. Some hermit crabs attach a sea anemone to their shell. The latter eats along with the food leftovers of the crab and with its stinging tentacles provides protection for the crab against predators. When the crab moves to another shell the sea anemone often moves with it.
   - Another typical example of mutualism is pollination of plants by nectar-eating or pollen-collecting insects.
   - A further example is formed by lichens where there is mention of the phycobiont (alga) and the mycobiont (fungus).
   - A mycorrhiza is a mutualistic symbiosis of fungi and plant roots (often of orchids or trees).
   - An extreme form of mutualism is endosymbiosis where an organism (the endosymbiont) lives in the body or in the cells of another organism (the host).

By separating the roots with the attached mycorrhiza from the rest of the plant after such plants have been propagated, a suitable starting material is obtained. This root structure can then be finely cut for being in a position to be added to the silt.

Preferably the soil conditioner is shaped into bodies, where the mycorrhiza is added to the silt before or after the soil conditioner has been shaped into bodies.

An advantageous embodiment of the method according to the invention is characterized in that in the case where the river sediment turns out to be polluted, it is determined experimentally which myocorrhiza destroys this pollution and/or converts it into matter useful to plants, and this mycorrhiza is then used for producing the soil conditioner.

Furthermore, preferably groats can be added to the soil conditioner.

### Brief description of the drawings

The invention will now be described in more detail based on examples of embodiment of the soil conditioner and the method according to the invention while reference is made to the appended drawing figures, in which:
Fig. 1 shows a first granular basic embodiment of the soil conditioner according to the invention;
Fig. 2 shows a first tablet-shaped basic embodiment of the soil conditioner according to the invention;
Fig. 3 shows a second granular embodiment of the soil conditioner according to the invention provided with a seed grain;
Fig. 4 shows a second tablet-shaped embodiment of the soil conditioner according to the invention provided with a seed grain;
Fig. 5 shows a third granular embodiment of the soil conditioner according to the invention incorporating groats.
Fig. 6 shows a third tablet-shaped embodiment of the soil conditioner according to the invention incorporating groats; and
Fig. 7 gives a diagrammatic representation of an embodiment of a method for producing the soil conditioner and the implementation thereof.

### Detailed description of the drawings

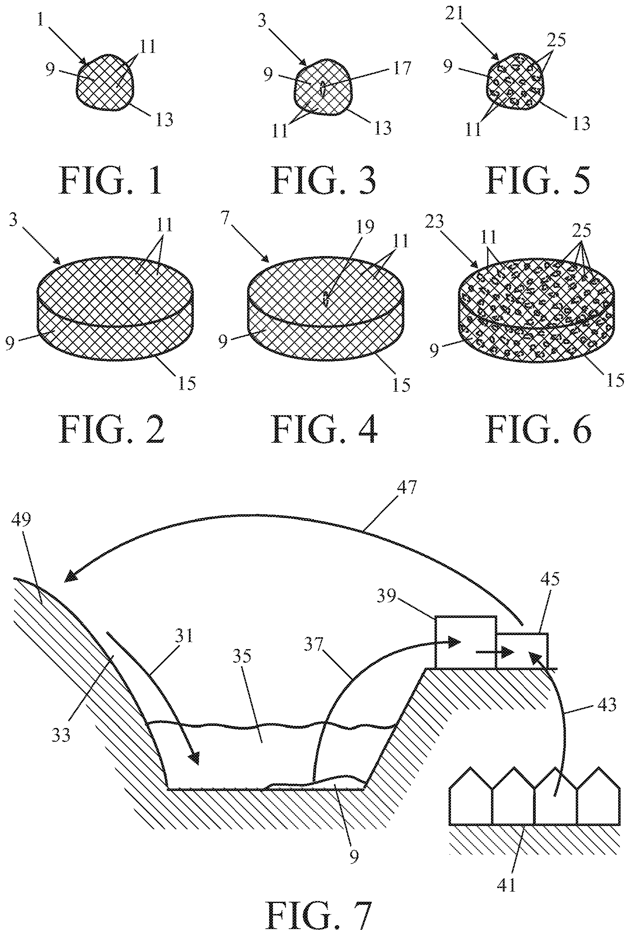

Fig. 1 shows a first granular embodiment of the soil conditioner according to the invention. This soil conditioner 1 has a granular body 13 consisting of partly dried silt 9 with mycorrhiza 11 mixed with it.

Fig. 2 shows a first tablet-shaped embodiment of the soil conditioner according to the invention. This soil conditioner 3 has a tablet-shaped body 15 of dried silt 9 with ycorrhiza 11 mixed with it.

Fig. 3 shows a second granular embodiment of the soil conditioner. This soil conditioner 5 is provided with a seed grain 17 which is present in encapsulated form in the silt 9.

Fig. 4 shows a second tablet-shaped embodiment of the soil conditioner. This soil conditioner 7 is also provided with a seed grain 19 which is present in encapsulated form in the silt 9.

Fig. 5 shows a third granular embodiment of the soil conditioner. In this soil conditioner 21 the groats 25 have been mixed with the silt 9. If so desired, here too a seed grain can be incorporated in the body 13.

Fig. 6 shows a third tablet-shaped embodiment of the soil conditioner. In this soil conditioner 23 groats have also been mixed with the silt 9. If so desired, here too a seed grain can be incorporated in the body 15.

Fig. 7 gives a diagrammatic representation of a method for producing the soil conditioner and the implementation thereof. As a result of erosion 31 the fertile top layer 33 of the soil is washed away to a river 35. At the place where here is little current or the water virtually comes to a standstill, there is accumulation of the silt 9. The silt is sledged away 37 and taken to a drying plant 39.

At the same time plants are cultivated 41 where it is mainly a matter of the root structure and the mycorrhiza cultivated during this process. This root structure is harvested and taken 43 to a production plant. Here the root structure and mycorrhiza are finely cut and mixed 45 with the partly dried silt. Then the silt and mycorrhiza are shaped into bodies and used for the fertilization 47 of nutrient-poor soil 49.

Albeit the invention has been described in the foregoing with reference to the drawing figures, it should be observed that the invention is not by any manner or means restricted to the embodiment shown in the drawing figures. The invention also extends to all embodiments deviating from the embodiment shown in the drawing figures within the scope defined by the claims.

## Claims

1. A soil conditioner comprising a solid body (13, 15) and a microorganism comprising mycorrhiza (11) introduced into the solid body, **characterized in that** the solid body (13, 15) comprises partly dried silt (9) being river sediment and **in that** the soil conditioner in addition to mycorrhiza comprises further living organisms comprising one or more of the following organisms, worms, worm eggs and predators, comprising predator mites.

2. A soil conditioner as claimed in claim 1, **characterized in that** the moisture content of the soil conditioner is situated between 10 and 40%.

3. A soil conditioner as claimed in any one of the preceding claims, **characterized in that** he soil conditioner further includes at least a single seed grain (17, 19) which is incorporated in the body (13, 15).

4. A soil conditioner as claimed in any one of the preceding claims, **characterized in that** the soil conditioner further includes groats (25).

5. A method for producing a soil conditioner, comprising:
- cultivating and harvesting (41) mycorrhiza,
- minimizing the mycorrhiza and selecting for the presence of spores,
- dredging (37) river sediment (9),
- drying (39) silt until the silt has a moisture content that is situated between 10 and 40%,
- introducing the mycorrhiza (45) into the silt.
- shaping the soil conditioner into bodies (13, 15), where the mycorrhiza (11) is added to the silt (9) before or after the soil conditioner has been shaped into bodies, and
- adding worms and/or worm eggs to the river sediment.

6. A method as claimed in claim 6, **characterized in that** the groats (25) are added to the soil conditioner.

## Patentansprüche

1. Bodenverbesserer, umfassend einen Festkörper (13, 15) und einen in den Festkörper eingebrachten Mikroorganismus aus Mykorrhiza (11), **gekennzeichnet dadurch, dass** der Festkörper (13, 15) teilweise getrockneten Schlamm (9) als Flusssediment umfasst und dass Der Bodenverbesserer neben Mykorrhiza weitere lebende Organismen umfasst, die einen oder mehrere der folgenden Organismen umfassen: Würmer, Wurmeier und Raubtiere, einschließlich Raubmilben.

2. Bodenverbesserer nach Anspruch 1, **dadurch gekennzeichnet, dass** der Feuchtigkeitsgehalt des Bodenverbesserers zwischen 10 und 40% liegt.

3. Bodenverbesserer nach einem der vorhergehenden Ansprüche, der **dadurch gekennzeichnet ist, dass** der Bodenverbesserer ferner mindestens ein im Körper befindliches Samenkorn (17, 19) (13, 15) umfasst.

4. Bodenverbesserer nach einem der vorhergehenden Ansprüche, der **dadurch gekennzeichnet ist, dass** der Bodenverbesserer ferner Grütze (25) umfasst.

5. Verfahren zur Herstellung eines Bodenverbesserers, umfassend:
- Anbau und Ernte (41) Mykorrhiza,
- Schrumpfen der Mykorrhiza und Auswahl auf das Vorhandensein von Sporen,
- Ausbaggern (37) Flusssediment (9),
- Trocknen von (39) Schlamm bis zu einem Feuchtigkeitsgehalt zwischen 10 und 40%,
- Einbringen der Mykorrhiza (45) in den Schlamm,
- Formen des Bodenverbesserers zu Körpern (13, 15), wobei die Mykorrhiza (11) dem Schlamm (9) zugesetzt wird, bevor oder nachdem sich der Bodenverbesserer zu Körpern gebildet hat, und
- Hinzufügen von Würmern und / oder Wurmeiern zum Flusssediment.

6. Verfahren nach Anspruch 5, **dadurch gekennzeichnet, dass** dem Bodenverbesserer Grütze (25) zugesetzt wird.

## Revendications

1. Amendement pour sol comprenant un corps solide (13, 15) et un microorganisme mis dans le corps solide et contenant de la mycorhize (11), **caractérisé en ce que** le corps solide (13,15) contient des boues partiellement séchées (9) étant des sédiments de rivière et **en ce que** l'amendement pour sol contient de plus, outre la mycorhize, des organismes vivants supplémentaires comprenant un ou plusieurs des organismes suivants : des vers, des œufs de vers et des prédateurs contenant des acariens prédateurs.

2. Amendement pour sol selon la revendication précédente, **caractérisé en ce que** la teneur en humidité de l'amendement pour sol se situe entre 10 et 40%.

3. Amendement pour sol selon une des revendications précédentes, **caractérisé en ce que** l'amendement pour sol contient également au moins un grain (17,19) se trouvant dans le corps (13,15).

4. Amendement pour sol selon une des revendications précédentes, **caractérisé en ce que** l'amendement pour sol contient de plus des gruaux (25).

5. Méthode pour la fabrication d'un amendement pour sol, comprenant :
- la culture et la récolte (41) de mycorhize,
- la réduction de la mycorhize et la sélection par recherche de traces,
- le dragage (37) de sédiments de rivière (9),
- le séchage (39) de boues jusqu'à ce que celles-ci aient une teneur en humidité située entre 10 et 40%,
- l'apport de la mycorhize (45) dans les boues,
- le façonnement de l'amendement pour sol jusqu'à obtention d'un corps (13,15), où la mycorhize (11) est ajoutée aux boues (9) avant ou après le façonnement de l'amendement pour sol en un corps, et
- l'ajout de vers et/ou d'oeufs de vers aux sédiments de rivière.

6. Méthode selon la revendication 5, **caractérisée en ce que** des gruaux (25) sont ajoutés à l'amendement pour sol.
